# DEMANDE DE BREVET EUROPEEN

(11) **EP 1 333 202 A1**
(43) Date de publication de la demande: **06.08.2003**
(21) Numéro de dépôt: 03075145.7
(22) Date de dépôt: 17.01.2003
(51) Int. Cl.: F16H 63/30

(54) **Procédé et dispositif de commande du passage des vitesses dans une boîte de vitesses de véhicule automobile**

(30) Priorité: 22.01.2002 FR 0200746
(71) Demandeur: VALEO EMBRAYAGES s.a.s., 80009 Amiens Cedex 1 (FR)
(72) Inventeur: Hoffmann, Christian, 75014 Paris (FR); Lebas, Gilles, 80000 Amiens (FR); Delevallee, Jean-Louis, 80480 Salouel (FR)
(74) Mandataire: Lemaire, Marc

(57) **Abrégé**

Procédé et dispositif de commande du passage de vitesse dans une boîte de vitesses de véhicule automobile, en particulier une boîte de vitesses robotisée, dans lesquels on utilise un moteur électrique (12) à faible inertie pour entraîner par une liaison à raideur élevée un élément de commande (22) monté sur la boîte de vitesses (24) pour le passage de vitesse, et on asservit la vitesse de rotation du moteur (12) à la position de l'élément de commande (22).

## Description

La présente invention concerne un procédé et un dispositif de commande du passage des vitesses dans une boîte de vitesses de véhicule automobile, en particulier une boîte de vitesses robotisée.

On a déjà proposé, dans les documents WO 99/56040 et FR 0016429, de commander les passages de vitesse au moyen d'une unité motrice comprenant un moteur électrique et des moyens de transformation de mouvement, reliée à un élément d'actionnement par un élément élastiquement déformable. L'élément d'actionnement, tel par exemple qu'un levier ou une fourchette, déplace d'abord des moyens de synchronisation pour rendre égales les vitesses de rotation des pignons du rapport de transmission à engager et des arbres primaire et secondaire de la boîte, puis des moyens de crabotage qui assurent la solidarisation en rotation de ces pignons et des arbres de la boîte de vitesses. Des capteurs de position sont prévus de part et d'autre de l'élément élastiquement déformable et sont reliés à des moyens de traitement de l'information qui commandent l'alimentation du moteur électrique de l'unité motrice.

Pour un passage de vitesse, le moteur électrique agit sur l'élément élastiquement déformable qui emmagasine une énergie mécanique (typiquement par compression d'un ressort) jusqu'à ce que l'effort que cet élément exerce sur les moyens de synchronisation dépasse un effort résistant opposé par ces moyens. Ensuite, la synchronisation étant assurée, la détente de l'élément élastiquement déformable provoque le crabotage et l'engagement du rapport de transmission. Pour éviter un effort trop violent à l'accostage sur les moyens de synchronisation et pour éviter également un choc brutal sur une butée de fin de course de crabotage, il faut piloter le moteur électrique à partir des informations fournies par les deux capteurs de position, de façon à moduler la compression de l'élément élastiquement déformable.

Ce pilotage en effort n'est pas simple à réaliser. Les autres inconvénients de ces moyens connus sont essentiellement leur encombrement et leur coût, en raison de la présence nécessaire de l'élément élastiquement déformable et des deux capteurs de position.

Il serait possible de supprimer l'élément élastiquement déformable entre l'unité motrice et l'élément d'actionnement, mais il faudrait alors ralentir le moteur électrique pour éviter des efforts trop élevés sur les moyens de synchronisation et des chocs trop violents sur les butées de fin de course de crabotage, ce qui allongerait sensiblement la durée du passage de vitesse.

L'invention a notamment pour but d'apporter une solution simple, efficace et économique à ces problèmes.

Elle a pour objet un procédé et un dispositif de commande qui permettent un passage de vitesse rapide, sans effort élevé sur les moyens de synchronisation ni choc violent sur les butées de fin de course de crabotage, et qui sont moins coûteux et moins encombrants que les moyens de la technique antérieure.

Elle propose à cet effet un procédé de commande du passage de vitesse dans une boîte de vitesses de véhicule automobile, en particulier une boîte de vitesses robotisée, dans laquelle la synchronisation et le crabotage d'un rapport de transmission sont réalisés par déplacement d'un élément de commande au moyen d'un moteur électrique, caractérisé en ce que, pour réduire la consommation électrique et l'échauffement et pour accélérer le passage de vitesse, on entraîne ledit élément de commande par un moteur électrique à faible inertie, relié à l'élément de commande par une liaison à raideur élevée, et on pilote l'alimentation dudit moteur électrique à partir des informations fournies par un capteur de position associé audit élément de commande.

L'utilisation d'un moteur électrique à faible inertie permet des temps de réponse plus courts, des variations plus rapides de la vitesse et une diminution de la consommation électrique du moteur, ainsi qu'un échauffement moindre, autorisant une plus grande fréquence des changements de vitesse. L'utilisation d'un moteur électrique à faible inertie permet également de piloter plus précisément ce moteur, et donc d'utiliser une liaison rigide ou à raideur élevée entre le moteur électrique et l'élément de commande sans effort élevé sur les moyens de synchronisation ni choc violent sur des butées de fin de course de crabotage. La suppression de l'élément élastique déformable utilisé dans la technique antérieure se traduit par une réduction de l'encombrement et du coût et permet l'utilisation d'un seul capteur de position, au lieu de deux.

Selon une autre caractéristique de l'invention, on asservit la vitesse de rotation du moteur électrique à la position de l'élément de commande, en réduisant cette vitesse pour que l'effort d'accostage sur les moyens de synchronisation reste inférieur ou égal à une valeur limite prédéterminée, en annulant cette vitesse pendant la synchronisation tout en maintenant un courant d'alimentation du moteur, et en redémarrant le moteur électrique pour le crabotage, en réduisant sa vitesse avant l'arrivée sur une butée de fin de course.

Cet asservissement de la vitesse de rotation du moteur électrique est relativement simple à réaliser et est de plus précis, avec des temps de réponse extrêmement courts.

De façon générale, ce procédé permet de réduire la durée du passage de vitesse dans une boîte de vitesses robotisée, tout en évitant les efforts trop élevés sur les moyens de synchronisation et les chocs violents sur les butées de fin de course de crabotage.

L'invention propose également un dispositif de commande du passage de vitesse dans une boîte de vitesses de véhicule automobile, en particulier une boîte de vitesses robotisée, ce dispositif comprenant au moins un moteur électrique d'entraînement d'un élément de commande déplaçable dans la boîte de vitesses pour la synchronisation et le crabotage d'un rapport de transmission, et des moyens de commande dudit moteur électrique, caractérisé en ce que le moteur électrique est un moteur à faible inertie et est relié à l'élément de commande par une liaison à raideur élevée, un capteur de position étant associé audit élément de commande et relié aux moyens de commande du moteur électrique pour asservir la vitesse de rotation de ce moteur à la position de l'élément de commande.

Selon d'autres caractéristiques de l'invention :
- le moteur électrique comprend un stator portant des bobinages électriques et un rotor portant des aimants permanents ,
- ce moteur électrique est un moteur synchrone à courant continu,
- la liaison à raideur élevé a une faible course de déformation élastique, inférieure à la course de synchronisation et à la course de crabotage,
- cette course de déformation élastique est inférieure ou égale à un millimètre environ.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est un schéma synoptique d'un dispositif de commande selon l'invention ;
- la figure 2 est un graphe illustrant la commande d'un moteur électrique pour le passage de vitesse selon la technique antérieure ;
- la figure 3 est un graphe représentant la commande du moteur électrique pour un passage de vitesse selon l'invention.

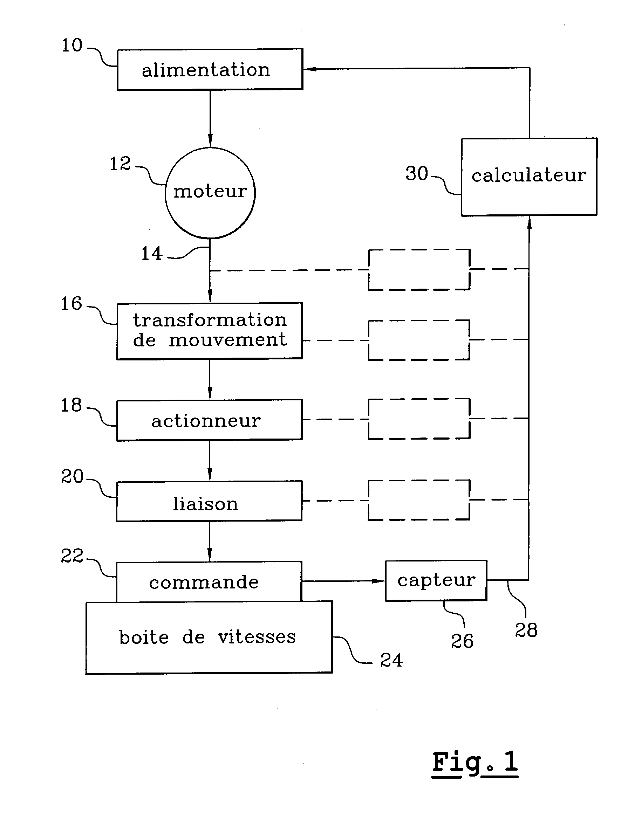

On a représenté schématiquement en figure 1 un dispositif de commande de passage de vitesse selon l'invention, qui est utilisé pour l'engagement d'un rapport de transmission dans une boîte de vitesses de véhicule automobile, en particulier une boîte de vitesses robotisée, après sélection de ce rapport de transmission.

De façon bien connue, l'engagement d'une vitesse dans une boîte de vitesses de véhicule automobile, robotisée ou non, comprend une première phase de sélection d'un rapport de transmission, correspondant par exemple à un déplacement transversal d'un levier de changement de vitesse dans une grille de vitesses, et une seconde phase de passage de vitesse correspondant à un déplacement longitudinal du levier du changement de vitesse dans la grille précitée et au cours de laquelle le rapport de transmission sélectionné est engagé. Au cours de cette seconde phase, il faut assurer d'abord une synchronisation des vitesses de rotation des pignons du rapport de transmission sélectionné, qui comprend en général un pignon porté par un arbre primaire de boîte de vitesses, entraîné en rotation par le moteur à combustion interne du véhicule automobile, et un pignon porté par l'arbre secondaire ou arbre de sortie de la boîte de vitesses, relié par une transmission aux roues motrices du véhicule automobile. Après la synchronisation a lieu un crabotage pour la solidarisation en rotation des pignons du rapport de transmission et des arbres primaire et secondaire de la boîte de vitesses. La synchronisation des vitesses de rotation se fait par friction et il faut éviter d'appliquer des efforts trop violents aux moyens de synchronisation, pour ne pas endommager les moyens de friction de ces moyens de synchronisation.

En outre, la course des moyens de crabotage est limitée par une butée de fin de course et l'on cherche à éviter les chocs trop violents sur cette butée, qui provoquent du bruit et qui peuvent entraîner une usure anormale et une dégradation des pièces en contact.

Pour cela, le dispositif selon l'invention représenté schématiquement en figure 1 comprend des moyens 10 d'alimentation électrique d'un moteur électrique 12 à faible inertie, qui est par exemple du type à stator portant des bobinages électriques et à rotor portant des aimants permanents.

Un tel moteur électrique, en particulier un moteur synchrone à courant continu, est remarquable par la faible inertie du rotor, permettant des variations rapides de la vitesse de rotation du moteur, par une plus faible consommation électrique et donc également par un échauffement moindre. Un tel moteur est décrit notamment dans la demande de brevet FR 0007653 déposée le 15 Juin 2000 par la demanderesse, à laquelle on pourra se reporter pour plus de détails si nécessaire.

Le moteur électrique 12 est relié, par son arbre de sortie 14, à des moyens 16 de transformation de mouvement, tels par exemple qu'un réducteur à engrenages ou analogue, relié par des moyens actionneurs 18 et des moyens de liaison 20 à un élément 22 de commande de passage de vitesse dans la boîte de vitesses 24 du véhicule automobile, cet élément 22 étant ou comprenant par exemple un levier mobile en pivotement ou en translation, tel notamment qu'une fourchette de changement de rapport de transmission.

Un capteur de position 26 d'un type quelconque approprié est associé à l'élément de commande 22 et génère un signal de sortie 28 représentant la position de l'élément de commande 22 dans un passage de vitesse, ce signal étant appliqué à des moyens 30 de traitement de l'information, notamment à un calculateur comprenant un microprocesseur et des mémoires, qui sont programmés pour commander les moyens 10 d'alimentation du moteur électrique 12 en fonction des informations fournies par le capteur 26 et de lois de commande pré-enregistrées en mémoire.

Dans ce dispositif, les moyens 16, 18, 20, 22 reliant l'arbre de sortie du moteur 12 aux moyens de synchronisation et de crabotage dans la boîte de vitesses 24 constituent une liaison à raideur élevée qui a une faible course de déformation élastique, au cours d'un passage de vitesse, inférieure à la course des moyens de synchronisation et à celle des moyens de crabotage. Pour fixer les idées, on peut dire que, si la course de synchronisation et celle de crabotage sont de quelques millimètres, par exemple de deux à trois millimètres, la course de déformation élastique des moyens de liaison précités ne dépassera pas un millimètre environ.

Le dispositif représenté schématiquement en figure 1 fonctionne de la façon suivante.

Quand un ordre de changement de rapport de transmission est donné, on procède successivement à la sélection du rapport de transmission à engager, puis à l'engagement de ce rapport de transmission (passage de vitesse). Pour cette seconde phase, un signal de commande est envoyé par les moyens 30 de traitement de l'information aux moyens 10 d'alimentation électrique du moteur 12, qui est alimenté par -un courant continu d'intensité déterminée, correspondant de préférence à une vitesse maximale de rotation du moteur 12. L'élément de commande 22 est alors entraîné à une vitesse maximale pour le déplacement d'un baladeur ou d'un manchon dans la boîte de vitesses, ce baladeur ou manchon venant successivement agir sur les moyens de synchronisation, puis sur les moyens de crabotage.

En figure 3, la courbe en trait plein représente la variation de la vitesse de rotation V1 du moteur 12 en fonction du temps t, et la courbe en croix représente la variation de la vitesse V2 du baladeur ou manchon en fonction du temps t, dans un passage de vitesse. Pour faciliter l'explication, les deux courbes V1 et V2 sont représentées avec les mêmes valeurs maximales et les mêmes valeurs minimales même si, en réalité, l'une de ces vitesses est une vitesse de rotation et l'autre une vitesse de translation.

Selon l'invention, la vitesse de rotation du moteur 12 est pilotée en fonction du signal 28 de position de l'élément de commande 22 fourni par le capteur 26 aux moyens 30 de traitement de l'information, et on prévoit de ralentir sensiblement la vitesse de rotation V1 du moteur 12 avant l'accostage du baladeur ou du manchon sur les moyens de synchronisation. La position du point d'accostage des moyens de synchronisation étant connue, par calcul et/ou par apprentissage comme indiqué dans les précédentes demandes de brevet de la demanderesse, on commande au temps t1 le ralentissement du moteur 12 de façon à arriver au temps t2 au point d'accostage sur les moyens de synchronisation avec une vitesse d'environ 0,1 m/s par exemple, qui est très nettement inférieure à la vitesse maximale de déplacement du baladeur ou du -manchon, pour réduire à une valeur admissible l'effort appliqué aux moyens de synchronisation et pour ainsi ne pas les endommager.

A l'accostage, qui a lieu à l'instant t2, la vitesse V2 du baladeur ou du manchon devient nulle et la vitesse de rotation V1 du moteur 12 diminue progressivement jusqu'à une valeur nulle, le moteur restant toutefois alimenté en énergie électrique pour maintenir sur les moyens de synchronisation l'effort nécessaire à leur fonctionnement.

La durée t2-t3 représente la durée de la synchronisation. A l'instant t3, les vitesses de rotation des pignons du rapport de transmission à engager et des arbres primaire et secondaire de la boîte de vitesses sont égales et le crabotage peut avoir lieu. Pour cela, on commande à l'instant t4, immédiatement après la fin de la synchronisation, le redémarrage du moteur 12 dont la vitesse V1 augmente très rapidement jusqu'à sa valeur maximale ou jusqu'au voisinage de cette valeur maximale avant d'être à nouveau réduite jusqu'à une valeur nulle à l'instant t5, qui correspond à la fin de la course de crabotage, déterminée par une butée de fin de course.

Le baladeur ou manchon est entraîné par le moteur 12 à une vitesse qui varie comme celle du moteur 12 et qui va donc augmenter jusqu'à une valeur maximale ou jusqu'au voisinage de cette valeur maximale puis diminuer jusqu'à une valeur nulle à l'arrivée sur la butée de fin de course à l'instant t5, le déplacement du manchon pouvant toutefois commencer avant l'instant t4 de redémarrage du moteur 12 en raison de la détente élastique des moyens de liaison qui relient l'arbre de sortie du moteur 12 au baladeur ou manchon dans la boîte de vitesses 24, cette détente élastique étant très brève et très courte et de toute façon insuffisante pour assurer le déplacement du baladeur ou du manchon sur toute la course de crabotage.

La faible inertie du moteur 12 permet une décélération rapide entre les instants t1 et t2, et une accélération rapide suivie d'une décélération rapide entre les instants t4 et t5, pour arriver finalement sur la butée de fin de course de crabotage avec une vitesse sensiblement nulle en évitant ainsi les chocs sur cette butée de fin de course et les bruits et dommages correspondants.

En outre, la faible inertie du moteur 12 permet de diminuer la durée du passage de vitesse, de réduire la consommation électrique du moteur et son échauffement.

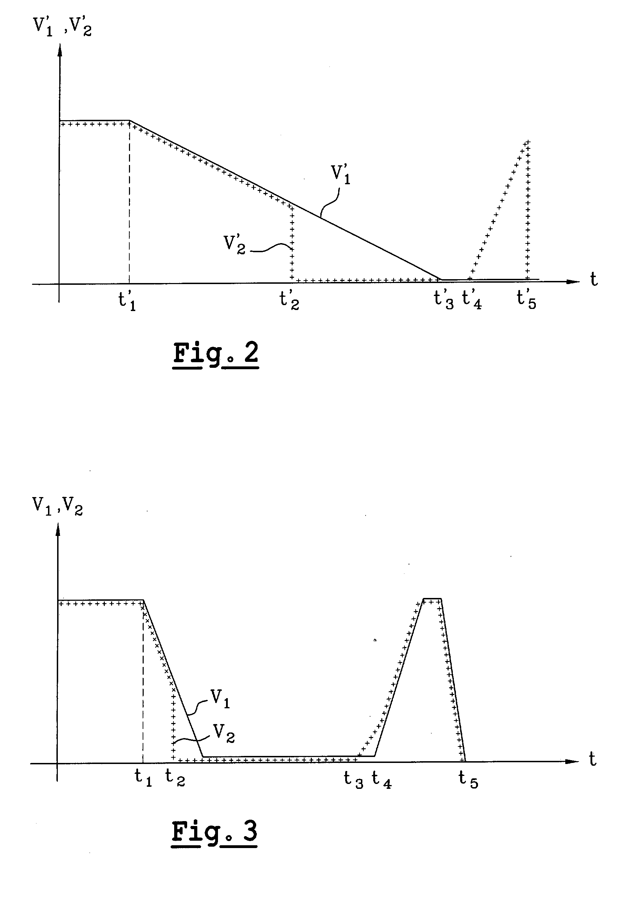

Dans la technique antérieure où on utilise un moteur électrique 12 d'un type classique qui est relié à l'élément de commande 22 par un élément élastiquement déformable du type ressort, destiné à emmagasiner de l'énergie, le fonctionnement est celui représenté schématiquement en figure 2 où la variation de la vitesse de rotation du moteur électrique est représentée par la courbe en trait plein V'1 et la variation de la vitesse du baladeur ou manchon est représentée par la courbe formée de croix V'2.

Pour le passage de vitesse, on commande au temps t'1 le ralentissement du moteur électrique pour arriver au point d'accostage des moyens de synchronisation au temps t'2 avec une vitesse de baladeur ou de manchon qui est réduite pour que l'effort appliqué aux moyens de synchronisation ne dépasse pas une valeur maximale admissible. Pendant la synchronisation, qui se termine à l'instant t'4, la vitesse de rotation du moteur électrique V'1 diminue jusqu'à- une valeur sensiblement nulle et assure la déformation élastique de l'élément de liaison à l'élément de commande 22 (typiquement la compression d'un ressort) . A la fin de la synchronisation à l'instant t'4, la détente élastique de cet élément déplace le baladeur ou manchon dont la vitesse V'2 augmente rapidement jusqu'à l'instant t'5 qui correspond à la fin de la course de crabotage par arrivée sur la butée de fin de course. L'accélération du baladeur ou manchon entre les instants t'4 et t'5 se traduit bien évidemment par un choc sur la butée de fin de course et donc par des bruits, avec un risque de dommage ou de détérioration des pièces à la longue.

Comme on le voit en comparant les courbes des figures 2 et 3, les décélérations et accélérations d'un moteur électrique classique sont nettement plus lentes que celles d'un moteur électrique à faible inertie, ce qui allonge les temps de réponse et augmente la durée du passage de vitesse. On voit également que la présence d'un élément élastiquement déformable dans la liaison entre le moteur et l'élément de commande sur la boîte de vitesses, pour assurer le crabotage par détente élastique de cet élément déformable, se traduit nécessairement par un choc sur la butée de fin de course de crabotage, et que la présente invention permet de supprimer ces inconvénients.

## Revendications

1. Procédé de commande du passage de vitesse dans une boîte de vitesses de véhicule automobile, en particulier une boîte de vitesses robotisée, dans laquelle la synchronisation et le crabotage d'un rapport de transmission sont réalisés par déplacement d'un élément de commande (22) au moyen d'un moteur électrique (12), **caractérisé en ce que**, pour réduire la consommation électrique et l'échauffement et pour accélérer le passage de vitesse, on entraîne ledit élément de commande par un moteur électrique (12) à faible inertie, relié à l'élément de commande (22) par une liaison à raideur élevée, et on pilote l'alimentation dudit moteur électrique à partir des informations fournies par un capteur de position (26) associé audit élément de commande (22).

2. Procédé selon la revendication 1, **caractérisé en ce qu'**on asservit la vitesse de rotation du moteur électrique (12) à la position de l'élément de commande (22), en réduisant cette vitesse pour que l'effort d'accostage sur les moyens de synchronisation reste inférieur ou égal à une valeur limite prédéterminée, en annulant cette vitesse pendant la synchronisation tout en maintenant un courant d'alimentation du moteur, en redémarrant le moteur électrique pour le crabotage et en réduisant sa vitesse avant l'arrivée sur une butée de fin de course.

3. Procédé selon la revendication 1 ou 2, **caractérisé en ce que** ladite liaison à raideur élevée a une faible course de déformation élastique, inférieure à la course de synchronisation et à la course de crabotage.

4. Procédé selon l'une des revendications précédentes, **caractérisé en ce que** la vitesse d'accostage des moyens de synchronisation est d'environ 0,1 m/s.

5. Dispositif de commande du passage de vitesse dans une boîte de vitesses de véhicule automobile, en particulier une boîte de vitesses robotisée, comprenant au moins un moteur électrique (12) d'entraînement d'un élément de commande (22) déplaçable dans la boîte de vitesses pour la synchronisation et le crabotage d'un rapport de transmission, et des moyens (30) de commande du moteur électrique, **caractérisé en ce que** le moteur électrique (12) est un moteur à faible inertie et est relié à l'élément de commande (22) par une liaison à raideur élevée, un capteur de position (26) étant associé à l'élément de commande (22) et relié aux moyens de commande (30) du moteur électrique pour asservir la vitesse de rotation de ce moteur à la position de l'élément de commande (22).

6. Dispositif selon la revendication 5, **caractérisé en ce que** le moteur électrique (12) comprend un stator portant des bobinages électriques et un rotor portant des aimants permanents.

7. Dispositif selon la revendication 6, **caractérisé en ce que** le moteur électrique (12) est un moteur synchrone à courant continu.

8. Dispositif selon l'une des revendications 5 à 7, **caractérisé en ce que** la liaison à raideur élevée a une faible course de déformation élastique, inférieure à la course de synchronisation et à la course de crabotage.

9. Dispositif selon la revendication 8, **caractérisé en ce que** ladite course de la déformation élastique est inférieure ou égale à un millimètre environ.

10. Dispositif selon l'une des revendications 5 à 9, **caractérisé en ce que** la vitesse d'accostage des moyens de synchronisation est d'environ 0,1 m/s.
